Europäisches Patentamt

European Patent Office

Office européen des brevets

(19)

(11) Veröffentlichungsnummer: **0 057 435**
**B1**

(12) **EUROPÄISCHE PATENTSCHRIFT**

(45) Veröffentlichungstag der Patentschrift:
29.05.85

(51) Int. Cl.⁴: **C 12 C 9/02**

(21) Anmeldenummer: **82100601.2**

(22) Anmeldetag: **28.01.82**

(54) **Verfahren zur Extraktion von Bitterstoffen und Gerbstoffen aus Hopfen und deren Verwendung.**

(30) Priorität: **03.02.81 DE 3103617**

(43) Veröffentlichungstag der Anmeldung:
**11.08.82 Patentblatt 82/32**

(45) Bekanntmachung des Hinweises auf die Patenterteilung:
**29.05.85 Patentblatt 85/22**

(84) Benannte Vertragsstaaten:
**AT BE CH DE FR GB IT LI LU NL**

(56) Entgegenhaltungen:
**DE - A - 1 927 996**
**FR - A - 445 465**
**FR - A - 806 492**
**FR - A - 1 301 968**
**GB - B - 837 058**

(73) Patentinhaber: **Horst & Klotz Hopfenveredelung GmbH, Auhofstrasse 16, D-8302 Mainburg (DE)**

(72) Erfinder: **von Horst, Louis, Dr., Dipl.-Ing., Hofbergleite 4, D-8302 Mainburg (DE)**
Erfinder: **Hartl, Alfons, Dr., Schlesierstrasse 14, D-8034 Germering (DE)**

(74) Vertreter: **Deufel, Paul, Dr. et al, Patentanwälte Müller-Boré, Deufel, Schön, Hertel, Lewald, Otto Isartorplatz 6 Postfach 26 02 47, D-8000 München 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

0 057 435

## Beschreibung

Die Erfindung betrifft das in den Patentansprüchen angegebene Verfahren zur Gewinnung von Bitterstoffen und Gerbstoffen aus Hopfen durch Extraktion des Hopfens mit wasserhaltigem Äthanol und nachfolgende Abtrennung des Gerbstoffs und Rückgewinnung des Äthanols aus dem Extrakt, sowie die Verwendung der dabei gewonnenen Bitterstoffe und Gerbstoffe zur Herstellung von standardisierten Hopfenextrakten und Hopfenpellets oder -pulver.

In jüngerer Zeit wird Hopfen überwiegend mit Dichlormethan (Methylenchlorid) zur Gewinnung der Bitterstoffe extrahiert, worauf in einer zweiten Extraktionsstufe der extrahierte Hopfen mit Heißwasser behandelt wird zur Gewinnung eines sogenannten Gerbstoffextrakts. Beide Extrakte werden, je nach Wunsch des Verbrauchers, in einem bestimmten Verhältnis vermischt. Methylenchlorid hat den Vorteil, daß es sehr gute Lösungseigenschaften für Hopfenbitterstoffe besitzt, nicht brennbar und mit Wasser nicht mischbar ist und bei niedriger Temperatur abdestilliert werden kann.

In gewissem Umfang werden auch noch Hexan und Methanol als Extraktionsmittel eingesetzt.

Aus technischen und wirtschaftlichen Gründen ist es jedoch schwierig, das Extraktionsmittel wieder quantitativ aus dem Extrakt zu entfernen. Offiziell wird zum Beispiel ein Restlösungsmittelgehalt von 2,2 Gew.-% Methylenchlorid im Hopfenextrakt toleriert.

Trotz seiner geringen Toxizität ist Methylenchlorid in jüngster Zeit als Extraktionsmittel für Lebens- und Genußmittel, insbesondere bei coffeinarmem Kaffee und Sojaöl, etwas in Verruf geraten, so daß nicht ausgeschlossen werden kann, daß seine Verwendung als Extraktionsmittel im Lebensmittelbereich in absehbarer Zeit nicht mehr in Frage kommt.

Alle anderen zur Hopfenextraktion geeigneten Lösungsmittel sind relativ stark toxisch und der gleichen Problematik unterworfen wie Methylenchlorid. So wurden bereits vor langer Zeit Äther und Alkohol für spezielle Hopfenextraktionsverfahren empfohlen, ohne jemals großtechnische Verwendung zu finden. Gemäß der DE-PS 54 812 aus dem Jahre 1890 wird zunächst das Lupulin aus den Hopfendolden abgetrennt, worauf die weitgehend lupulinfreien Dolden mit Wasser ausgekocht und das Lupulin mit Äther oder einem 10/90-Gemisch aus Äther/Alkohol extrahiert werden. Beide Extrakte werden eingedickt und dann vermischt. Gemäß der DE-PS 535 841 aus dem Jahre 1928 werden Öle und Harze des Hopfens dadurch extrahiert, daß in einer Art Umlaufverdampfer in einem geschlossenen System unter Vakuum Wasser und Alkohol, teilweise als Dampf, teilweise als Kondensat, im Kreise durch den Hopfen geführt werden. Dieses Verfahren und insbesondere die erforderliche Vorrichtung sind jedoch viel zu kompliziert und aufwendig, um eine wirtschaftliche Bedeutung zu erlangen. Zum wirtschaftlichen und technischen Erfolg führten erst die zu Beginn der 20iger Jahre entwickelten Extraktionsverfahren mit Methylenchlorid. Mit Hexan oder Methanol als Extraktionsmittel werden demgegenüber wenig befriedigende Extraktionsausbeuten erhalten.

Bei der Suche nach neuen Lösungsmitteln für die Hopfenextraktion bot sich Äthylalkohol aus verschiedenen Gründen nicht an, obwohl er in Spurenmengen als Stoffwechselprodukt im menschlichen Organismus vorliegt und in einem Hopfenextrakt gegebenenfalls vorhandenes, restliches Äthanol als produktspezifischer Bierbestandteil nicht zu beanstanden ist. Bisher wurde bei der Verwendung von Äthylalkohol für die Hopfenextraktion als nachteilig zum Beispiel angesehen die Brennbarkeit und die damit verbundene Explosionsgefahr, der hohe Siedepunkt, die große Verdampfungswärme und die Mischbarkeit mit Wasser. Außerdem hielt man es für einen Nachteil, daß mit Äthanol, insbesondere mit wasserhaltigem Äthanol, auch Nichtbitterstoffe, in erster Linie Polyphenole (Gerbstoffe) in unterschiedlichen Mengen mitextrahiert werden, was die Standardisierung des Extraktes auf einen bestimmten Bitterstoffgehalt erschwert und die Gewinnung eines Reinharzextraktes, wie er vielfach gewünscht wird, durch einfache Extraktion verhindert.

Dies bestätigt auch der weitere Stand der Technik. Die DE-PS 635 624 schlägt zum Beispiel vor, Hopfen zuerst mit Äther oder, nur bei an Hopfenöl armem Hopfen, mit Alkohol zu extrahieren und den verbliebenen Treber dann mit einem Alkohol-Wassergemisch, vorzugsweise unter Zwischenschaltung einer Extraktion mit einem Gemisch von Äther-Alkohol und eventuell Wasser. Dieses Verfahren wurde nie in die Technik umgesetzt, eben weil mit Alkohol kein reiner Bitterstoffextrakt erhalten werden konnte. Obwohl nicht ausdrücklich angegeben, dürfte dabei nämlich üblicher 96%iger Alkohol eingesetzt worden sein, der jedenfalls im Verfahrensablauf immer wieder sorgfältig fraktioniert wurde, um auch das Hopfenöl zurückzugewinnen. Das Verfahren eignet sich auch deshalb nicht zur Herstellung eines auf einen gewünschten Standard einstellbaren Extraktes, da sich beim Arbeiten mit weitgehend wasserfreiem Alkohol kein Gleichgewicht zwischen extrahiertem und rückgewonnenem Hopfenöl einstellt.

Die DE-PS 737 809 geht von Hopfenextrakt aus, um diesen in standardisiertes Präparat zu überführen und zerlegt diesen Extrakt entweder mit einem organischen Lösungsmittel für die Hopfenharze oder mit Wasser, um den Hopfengerbstoff zu extrahieren, und die auf diese Weise getrennten Extraktbestandteile können dann in beliebigem Verhältnis gemischt werden. Es ist also erforderlich, zuerst einen Hopfenextrakt herzustellen (z. B. auch das alte Verfahren der DE-PS 635 624) durch zweistufige Extraktion mit Äther oder Alkohol und dann mit Alkohol-Wassergemisch und diesen Extrakt dann durch erneute Extraktion in seine Bestandteile zu zerlegen und dann die so gewonnenen Bestandteile zu einem Standardpräparat zu mischen. Die sehr viel ältere DE-PS 395 502 zeigt unter Hinweis auf die

2

schon früher erörterte Arbeitsweise der DE-PS 54 812 einerseits den weitgehend von Lupulin befreiten Hopfen sowie andererseits auch das Lupulin selbst zuerst mit Äther und dann in einer zweiten Stufe mit Alkohol zu extrahieren, wobei der Alkoholextrakt durch weitere Extraktion mit Methyläther wieder in Weichharz und Hartharz aufgetrennt wird, und der Rückstand der Ätherextraktion und der Alkohol extraktion wird dann einer dritten Extraktion mit Wasser unterzogen. Hierbei wird also, wie in der DE-PS 54 812 eine mechanische Abtrennung des Lupulins vom Hopfen vorgenommen, und dann werden insgesamt vier verschiedene Extrakte erzeugt, wobei man beim Vermischen dieser vier Extrakte zur Erzielung eines standardisierten Präparates noch aus anderen Quellen stammendes Hopfenöl zusetzen muß.

Die DE-OS 14 42 160 geht ebenfalls schon von Hopfenextrakt aus, der dann weiter extrahiert wird, wobei der als Ausgangsmaterial verwendete Extrakt mit 80- bis 90vol.-%igem Äthanol extrahiert werden kann um einen an Weichharzen reichen Extrakt aus einem ursprünglich mit Benzol erhaltenen Extrakt zu gewinnen. Auch dies ist kein Verfahren zur Extraktion von Hopfen, sondern ein Reinigungsverfahren von Rohextrakt für die weitere Verarbeitung zu isomerisierten Extrakten.

Der Erfindung liegt die überraschende Erkenntnis zugrunde, daß Äthanol als Extraktionsmittel für Hopfen hervorragend geeignet ist, die vermuteten Nachteile durch geeignete technologische Maßnahmen aufgehoben und teilweise sogar vorteilhaft genutzt werden können und darüber hinaus unerwartete Vorzüge des Äthanolextrakts auftreten, insbesondere verbesserte Extraktionsausbeuten und erhebliche Brauwertgewinne.

Erzielt werden diese Vorteile dadurch, daß der Wassergehalt des als Extraktionsmittel dienenden wäßrigen Äthanols und die Menge des zur Entfernung des Äthanols aus dem Extrakt eingesetzten Wassers oder Wasserdampfes entsprechend gesteuert werden unter Bildung eines Zweiphasensystems aus oberer Bitterstoffphase und unterer Gerbstoffphase. In der angegebenen Weise erfolgen die Entfernung des Äthanols und die Auftrennung der Bitterstoff- und Gerbstoffanteile gleichzeitig aufgrund der Dichteunterschiede dieser beiden Komponenten, wobei die untere wäßrige Gerbstoffphase ein spezifisches Gewicht von etwa 1,2 besitzt. Diese überraschende Zweiphasenbildung im vollständig wasserlöslichen Äthanol wird durch keines der bekannten Hopfenextraktionsverfahren, bei denen Alkohol zum Einsatz gelangt, nahegelegt.

So betrifft GB-A-837 058 die Herstellung eines Hopfenkonzentrats, bei dem völlig frischer Hopfen mit einem organischen Lösunsmittel, bei dem es sich unter anderem auch um Äthanol handeln kann, extrahiert und der Extrakt durch Eindampfen oder Destillation konzentriert wird. Das verwendete Extraktionsmittel muß praktisch wasserfrei sein, um das Lösen von Gerbstoffen möglichst zu verhindern, so daß schon deshalb die Bildung eines Zweiphasenproduktes des erfindungsgemäßen Typs ausgeschlossen ist. Das gleiche gilt für das Verfahren gemäß FR-A-1 301 968, wonach Hopfen mit einem organischen Lösungsmittel extrahiert wird, bei dem es sich unter anderem um Äthanol handeln kann, jedoch müssen dem Extraktionsmittel 10 bis 40% Ammoniak zugesetzt werden, was zu einer Isomerisierung durch Umwandlung der Humulone in Isohumulone führt. Bei der Hopfenextraktion gemäß FR-A-445 465 erfolgt eine mechanische Vorbehandlung, und der Hopfen wird zunächst vermahlen und gesiebt zur Abscheidung der Lupulinfraktion, worauf der erhaltene Rückstand mit konzentriertem oder verdünntem Alkohol extrahiert und danach konzentriert wird. Das erhaltene Konzentrat wird mit der Lupulinfraktion gemischt, die vor dem Vermischen in analoger Weise extrahiert und konzentriert werden kann.

Bei Durchführung des erfindungsgemäßen Verfahrens zeigte sich, daß Äthanol ein außerordentlich hohes Durchdringungsvermögen für Hopfendolden auch bei höherem Wassergehalt und ein sehr gutes Lösungsvermögen für Hopfenharze besitzt, daß unerwünschte Wachse nicht mitextrahiert werden und daß sich durch Erhöhung der Extraktionstemperatur auf zum Beispiel 40 oder 60°C die Extraktionsgeschwindigkeit und auch die Extraktausbeute erheblich steigern läßt.

Die bisher als nachteilig angesehene Tatsache, daß wäßriges Äthanol auch Gerbstoffe mitextrahiert, kann vorteilhaft genutzt werden, da die einzelnen, Extrakt verwendenden Brauereien je nach örtlichen Gegebenheiten und Brauverfahren unterschiedliche Gerbstoffanteile im Extrakt wünschen. Weil nun bei der erfindungsgemäßen Extraktion des Hopfens mit wasserhaltigem Äthanol der Gerbstoffanteil des Extrakts abhängig ist vom Wassergehalt des Äthanols, kann durch Variieren der Äthanolkonzentration, zum Beispiel zwischen etwa 70 bis 100, vorzugsweise zwischen etwa 80 und 95,5 bzw. rund 96 Gew.-%, insbesondere aber zwischen 85 und 93 Gew.-% (das ist 89,5—95,5 Vol.-%) ein bestimmter Gerbstoffgehalt mit einer einmaligen Extraktion eingestellt werden. Damit entfällt die bisher notwendige zweite Extraktion des Hopfens mit Heißwasser, die sehr arbeits- und energieaufwendig ist, sowie das viel Energie erfordernde Eindampfen des Heißwasserauszugs. Außerdem ist die exakte Vermischung der beiden Extrakte nicht mehr erforderlich. Eine Extraktion von Hopfen mit 100%igem Äthanol, die relativ gerbstoffarme Extrakte ergibt, ist zwar möglich, doch wird, da Hopfen immer etwas Wasser enthält, der Alkohol verdünnt. Außerdem läßt sich natürlich aus Äthanol-Wassergemisch 100%iges Äthanol durch einfache Rektifikation nicht zurückgewinnen.

Überraschend ist, daß bei der erfindungsgemäßen Äthanolextraktion neben der verbesserten Extraktionsausbeute auch noch ein zusätzlicher Brauwertgewinn des Extrakts erzielt wird, der größer ist als derjenige von konventionellen Methylenchlorid-Extrakten, die bekanntlich im Vergleich zum Naturhopfen höhere Bitterwerte im Bier bewirken. Ein derartiger Brauwertgewinn, der sich in Form von Hopfeneinsparung niederschlägt, wird darauf zurückgeführt, daß der aus den Lupulindrüsen befreite, sirupartige Extrakt beim Würzekochen rascher in Lösung geht und dadurch schneller isomerisiert. Als Mittelwert für die Einsparung an Hopfen gilt für Methylenchlorid-Extrakte ein Wert von ca. 15%. Sowohl im Kleinsudwerk bei wissenschaftlichen Instituten als auch in Brauereien zeigte sich, daß mit Äthanolextrakten eine Hopfenersparnis von bis zu 40% erzielt wird. Bei einer gegenüber Naturhopfen um 40% verminderten Bitterstoffgabe wurden Biere mit mindestens der gleichen Bittere erhalten, und bei vergleichender Kostprobe wurden die Äthanolextraktbiere überwiegend bevorzugt.

Es wird angenommen, daß durch die erfindungsgemäße Extraktion mit wasserhaltigem Äthanol, bei dem es sich ja praktisch um ein wäßriges, hydrophiles Medium handelt, Extrakte mit mehr »hydrophilem Charakter« anfallen, die daher in einem wäßrigen Medium noch leichter und schneller in Lösung gehen. Demgegenüber werden mit anderen Lösungsmitteln auch hydrophobe Substanzen, zum Beispiel die Hopfenwachse, mitextrahiert, die möglicherweise eine gewisse Hemmwirkung beim Auflösungsvorgang ausüben.

Ein weiterer erfindungsgemäß erzielbarer Vorteil ist darin zu sehen, daß Pestizide nicht mitextrahiert werden. Während bei Verwendung von Naturhopfen alle auf den Dolden vorhandenen Pflanzenschutzmittel unmittelbar in die Würze gelangen, ist dies bei Verwendung von Äthanolextrakten nicht der Fall. Untersuchungen haben ergeben, daß in Äthanolextrakten weder Thiocarbamate noch Thioharnstoffe, die sich beim Kochen aus den als Fungizid vielfach verwendeten Dithiocarbamaten bilden, vorliegen. Etwa 90% dieser Verbindungen werden im extrahierten Hopfentreber wieder gefunden.

Die Entfernung des Äthanols aus dem gewonnenen Extrakt kann in üblicher bekannter Weise erfolgen, doch läßt sich der Energieaufwand beim Eindampfen der äthanolischen Extraktlösung durch Verwendung von modernen mehrstufigen Fallfilmverdampferanlagen ganz erheblich reduzieren und unter den beim Eindampfen von Methylenchloridextrakt erforderlichen Energieverbrauch senken. Der Einsatz dieser mehrstufigen Verdampfer ist zum Beispiel bei Methylenchlorid unwirtschaftlich, da die Temperaturdifferenz in den einzelnen Stufen zu gering ist, doch bringt er erfindungsgemäß erhebliche Vorteile, zum Beispiel auch den, daß der Extrakt nur wenige Sekunden hohen Temperaturen ausgesetzt ist. Eine mehrstufige Verdampferanlage bietet außerdem die Möglichkeit, aus den ersten Stufen hochprozentiges Äthanolkondensat abzuziehen, so daß nur noch ein geringer Rest des Lösungsmittels rektifiziert werden muß.

Da manche Brauereien reinen Harzextrakt ohne Gerbstoffanteil verwenden, wird der Gerbstoff aus dem erfindungsgemäß erhaltenen Extrakt abgetrennt, wenn ein gerbstoffarmer Äthanolextrakt verlangt wird. Der wasserlösliche Gerbstoff kann zum Beispiel durch Behandlung des Extrakts mit Heißwasser herausgewaschen weden, doch wird erfindungsgemäß eine Behandlung des Extrakts mit Wasserdampf im Gegenstrom bevorzugt, die den Vorteil bietet, daß kontinuierlich gearbeitet und der Gerbstoffanteil sowie der Restalkohol praktisch vollständig aus dem Bitterstoff entfernt werden kann.

Zur Gerbstoffentfernung mit Heißwasser wird heißer Äthanolextrakt mit 75—80% Feststoff in ein unter Vakuum stehendes Gefäß eingezogen, wobei schon eine teilweise Verdampfung des Alkohols erfolgt. Nach Erhöhung des Vakuums wird eine berechnete Menge Heißwasser einbezogen, wobei unter starkem Aufkochen eine intensive Durchmischung erfolgt, der größte Teil des Alkohols als Äthanol/Wasser-Dampf abdestilliert und das verbleibende Heißwasser die Gerbstoffe des Extraktes löst. Bei richtiger Wahl des Verhältnisses Extrakt/Wasser bilden sich zwei Phasen, nämlich eine nahezu gerbstofffreie Bitterstoffphase und eine wäßrige Phase, die fast alle wasserlöslichen Anteile und einen Teil des Alkohols enthält. Beide Phasen können abgezogen und getrennt aufgearbeitet werden. Restmengen des Alkohols im wasserhaltigen Bitterstoff können mit einem Dünnschichtverdampfer leicht entfernt werden.

Zur Gerbstoffentfernung mit Wasserdampf wird heißer Äthanolextrakt mit ca. 75—80% Feststoff auf eine Füllkörper- oder Glockenbodenkolonne gepumpt. Im Gegenstrom wird von unten nach oben Wasserdampf durchgeblasen. Der Dampfstrom kann so eingestellt werden, daß einerseits aus dem in dünner Schicht über die Füllkörper laufenden Extrakt der gesamte Alkohol wie in einer Rektifizierkolonne oben abdestilliert und sich andererseits der kondensierte Dampfanteil mit dem Extrakt mischt und die wasserlöslichen Anteile herausgelöst werden. Der Ablauf aus Bitterstoff und wäßriger Gerbstofflösung wird getrennt und aufgearbeitet. Wie bereits erwähnt, wird auf diese Weise ein kontinuierlicher Durchsatz und eine praktisch vollständige Entfernung des Äthanols erzielt.

Das Verfahren der Erfindung bietet somit die Möglichkeit, in einer einzigen Extraktionsstufe mit einem geeigneten Alkohol-Wassergemisch durch Einstellung des geeigneten Wassergehalts, vorzugsweise durch Verwendung von 85- bis 93gew.-%igem Alkohol, insbesondere etwa 90gew.-%igem Alkohol, Gerbstoff und Bitterstoff zu gewinnen und dann in einem Schritt, z. B. in einer Waschkolonne vom Typ der Glockenbodenkolonne, die Gerbstoffe und die Bitterstoffe in einfacher Weise zu trennen, da sich bei geeigneter Verfahrensführung zwei Phasen einstellen, eine obere Bitterstoffphase und eine untere Gerbstoffphase, die dann leicht getrennt werden können. Durch das Einblasen von Dampf in die Kolonne wird gleichzeitig der gesamte Alkohol vom Extrakt abgestrippt und rückgewonnen. Entscheidend bei dieser Verfahrensweise ist, daß die wäßrige Phase ein spezifisches Gewicht von etwa 1,2 erreicht, d. h. es darf nicht zu viel oder zu wenig Wasserdampf kondensieren. Die erforderliche Wassermenge, die wiederum abhängig ist vom Gerbstoffanteil, läßt sich durch den Restalkoholgehalt des Rohextrakts steuern, da bei Verdampfen des Alkohols eine (Energie-)äquivalente Menge Wasserdampf kondensiert.

Die mit Extraktionsmittel behandelten Hopfentreber enthalten auch nach dem Abpressen noch etwa 70% Lösungsmittel. Aus Umweltschutz- und wirtschaftlichen Gründen, aber auch wegen alkoholsteuerrechtlichen Vorschriften wird aus diesem Treber der Alkohol entfernt, was zwar, wenn auch sehr umständlich, durch Ausdämpfen erfolgen kann, doch fallen dabei sehr große Mengen stark verdünnter Alkohollösungen an, die wieder rektifiziert werden müssen.

Erfindungsgemäß bevorzugt wird zu diesem Zweck das sogenannte FDS-Verfahren (Flash-Desolventizing-System-Verfahren), das bisher bei der Hopfenverarbeitung noch nicht eingesetzt und zum Beispiel in Fette—Seifen—Anstrichmittel 76, 497 (1974), beschrieben wird. Nach diesem Verfahren wird das zu trocknende Gut mit einem überhitzten Gasstrom verwirbelt, wobei das vorhandene Lösungsmittel durch die Überhitzungswärme des Fördermediums zum Verdampfen gebracht wird. Erfindungsgemäß werden die feuchten Treber über eine gasdichte Schleuse in ein Rohrsystem eingeführt und mit überhitztem Alkoholdampf von zum Beispiel 100 bis 130°C, insbesondere 100 bis 120°C, verwirbelt und pneumatisch befördert. Wenn nach einer Kontaktzeit von wenigen Sekunden das flüssige Lösungsmittel verdampft ist, werden die praktisch lösungsmittelfreien Treber über einen Zyklon ausgetragen. Über ein automatisches Regelventil wird aus dem System eine Gasmenge abgezogen, die der Menge des verdampften Lösungsmittels entspricht und als Heizdampf verwendbar ist. Das übrige Gas wird über einen Überhitzer wieder zur Trebereintrittstelle geführt. Die nahezu trockenen Treber können pelletiert und dadurch als Viehfutter verwendet werden, was bei nassem Treber nicht möglich ist.

Die folgenden Beispiele sollen die Erfindung näher erläutern. Wenn nichts anderes angegeben ist, bedeuten % immer Gew.-%.

Beispiele 1 bis 4 zeigen die mit wäßrigem Äthanol als Extraktionsmittel erzielbaren Ausbeuteverbesserungen, die Beispiele 5 und 6 erläutern das erfindungsgemäße Verfahren, und Beispiel 7 gibt die vorteilhaften Ergebnisse von Brauversuchen wieder.

## Beispiel 1

### (Soxhlet-Extraktion)

Je 100 g Hopfen wurden in Soxhlet-Apparat 6 h extrahiert, der Extrakt i.V. eingedampft und analysiert. Die erhaltenen Ergebnisse sind in Tabelle I aufgeführt, wobei die $\alpha$-Säuren als Konduktometerwert (KW) bestimmt wurden.

Tabelle I

| Lösungsmittel | Extraktmenge (g) | Ges. Harz (%) | Alphasäuren (KW) (g) |
|---|---|---|---|
| Methylenchlorid | 21,5 | 95,95 | 11,1 |
| 90 Gew.-% Äthanol | 41,0 | 58,35 | 11,4 |

Die Ergebnisse zeigen, daß unter gleichen Extraktionsbedingungen mit 90gew.-%igem Äthanol nicht nur mehr Extrakt erhalten wird, sondern gegenüber Methylenchlorid auch etwas mehr Alphasäuren aus dem Hopfen extrahiert werden.

## Beispiel 2

### (Omni-Mixer-Extraktion)

Je 30 g gemahlener Hopfen wurden in vier Sorvail-Becher eingefüllt, mit je 300 ml Lösungsmittel versetzt und 10 min lang mazeriert. Als Lösungsmittel dienten Hexan, Methylenchlorid und 90- bzw. 95vol-%iges Äthanol. Die Mischungen wurden filtriert, und je 30 ml des Filtrats wurden eingedampft und analysiert.

Die Ergebnisse zeigten, daß unter gleichen Extraktionsbedingungen mit Äthanol gegenüber Hexan und Methylenchlorid mehr Alphasäuren im Extrakt erhalten wurden.

Der Nichtbitterstoffanteil (»Gerbstoffgehalt«) betrug mit Hexan 0% und mit Methylenchlorid 4,6% und lag mit 90vol.-%igem (ist gleich 85,5 Gew.-%) Äthanol bei 30% und mit 95vol.-%igem (ist gleich 92,5 Gew.-%) Äthanol bei ca. 25%, berechnet als Trockensubstanz.

**0 057 435**

Beispiel 3

(Temperatureinfluß)

Je 50 g gemahlener Hopfen wurden in einem Kolben mit je 600 ml Methylenchlorid bzw. 90- bzw. 95vol.-%igem) Äthanol als Lösungsmittel unterschiedlicher Temperatur versetzt und unter Aufrechterhaltung der Temperatur unter leichtem Rühren 20 min extrahiert. Das Extraktionsgut wurde abfiltriert und erneut zweimal mit je 400 ml Lösungsmittel 20 min extrahiert. Der Lösungsmittelauszug wurde abgesaugt, und der Rückstand mit 100 ml Lösungsmittel nachgewaschen. Die Extrakte wurden eingedampft und analysiert.

Es ergab sich, daß mit steigenden Temperaturen sowohl die Extraktausbeute als auch die Ausbeuten an Alphasäuren anstiegen.

Beispiel 4

(Kreuz- bzw. Gegenstromextraktion)

700 g Hallertauer Aromahopfen (Haro) mit 5,6% Alphasäuren bzw. Hallertauer Nordbrauer (HNB) mit 9,3% Alphasäuren, auf eine mittlere Teilchengröße von 4 bis 4,5 mm zerkleinert, wurden in eine Säule mit 100 mm Durchmesser eingefüllt und mit ca. 3 bis 5 kg Lösungsmittel pro kg Hopfen bei 20 bzw. 40 bis 50°C durch Umpumpen extrahiert. Als Lösungsmittel diente 80- bzw. 90gew.-%iges Äthanol und in einem Vergleichsversuch Hexan. Nach jeweils 20 min wurde der Lösungsmittelauszug abgelassen und neues Lösungsmittel eingefüllt. Insgesamt wurde sechs- bzw. achtmal extrahiert.

In einem mit 90gew.-%igem Äthanol bei 40 bis 50°C durchgeführten Versuch wurde im Gegenstrom extrahiert, d. h. die erhaltenen Extraktionslösungen wurden zur Extraktion von frischem Hopfen verwendet, wobei die Miscella mit der höchsten Extraktkonzentration als erste für die neue Extraktionsreihe verwendet wurde. Bei dieser Versuchsreihe wurden annähernd praxisgerechte Bedingungen eingehalten, und vor allem wurde die Lösungsmittelmenge möglichst gering gehalten.

Es zeigte sich, daß auch bei einem niedrigen Spülverhältnis (kg Lösungsmittel zu kg Hopfen), das zwischen etwa 3 und 4,6 variierte, durch Kreuz- bzw. Gegenstromextraktion mit Äthanol gute Extraktionsausbeuten erzielt werden können. Dies wurde auch durch die Treberanalyse bestätigt, wonach der Gehalt an Gesamtharz mit Äthanol 0,2 bis 0,7% und mit Hexan 4,3% ausmachte. Der unter gleichen Bedingungen durchgeführte Extraktionsversuch mit Hexan erbrachte eine völlig unzureichende Extraktionsausbeute.

Beispiel 5

(Gerbstoffabtrennung mit Wasserdampf)

Auf eine mit Raschig-Ringen gefüllte Glassäule, Durchmesser 80 mm, Höhe 1000 mm, wurde kontinuierlich erwärmter Rohextrakt mit einem Restlösungsmittelgehalt von 17% aufgegeben, der in dünner Schicht über die Füllkörper lief. Von unten wurde im Gegenstrom Wasserdampf unter einem Druck von 0,3 bis 0,6 bar eingeblasen. Ein Teil des Wasserdampfes kondensierte und vermischte sich intensiv mit dem Extrakt. Dieses Rücklaufverhältnis kann durch die eingeführte Dampfmenge, mehr oder weniger starke Isolierung der Säulenwand sowie durch die Temperatur des aufgegebenen Rohextrakts gesteuert werden. Es wurde so gewählt, daß die Dichte der wäßrigen Gerbstoffphase deutlich über derjenigen der Bitterstoffphase lag. Ein Teil des Wasserdampfes wurde zusammen mit dem verdampften Alkohol oben abgezogen und in einer Vorlage kondensiert. Das unten ablaufende Extrakt-Wasser-Gemisch wurde durch Schwerkraft (durch Zentrifugieren) getrennt, worauf die beiden Phasen aufgearbeitet wurden.

In der verwendeten Anlage konnte die Dampfmenge nicht exakt gemessen werden. In einem typischen Versuch wurde sie durch Auswägen aller Fraktionen aus der Gewichtszunahme ermittelt, was folgende Werte ergab:

| Rohextrakt | 3700 g | | | |
|---|---|---|---|---|
| Extrakt Auslauf | 4320 g | davon | Bitterstoffphase | 2200 g |
| | | | Gerbstoffphase | 2120 g |
| Kondensat | 260 g | | | |
| Gewichtszunahme | 880 g | | | |

Die gefundene Gewichtszunahme von 880 g ist durch die eingeblasene Dampfmenge bedingt und wurde als Dampfverbrauch angenommen. Die übrigen Ergebnisse sind in Tabelle II aufgeführt.

6

Tabelle II

| Versuch | Probe bzw. Phase | Feststoff % | Gerbstoffg. % Trs. | Ges. Harz %Trs. | Alpha-S. (KW) % Trs. | Äthanol Gew.-% |
|---------|------------------|-------------|--------------------|-----------------|----------------------|----------------|
| — | Rohextr. | 82,2 | 28,8 | 71,2 | 32,6 | 16,2 |
| A | Bitterst. | 89,5 | 4,1 | 95,9 | 39,1 | 3,4 |
|   | Gerbstoff |      | 17,7 | 1,1 | 0,25 | 4,1 |
| B | Bitterst. | 93,7 | 2,4 | 97,6 | 39,8 | 1,0 |
|   | Gerbstoff |      | 57,0 | 1,0 | 0,05 | 1,0 |
| C | Bitterst. | 88,1 | 0,7 | 99,3 | 43,2 | 1,0 |
|   | Gerbstoff |      | 39,8 | 1,0 | 0,1 | 0,9 |

Die Ergebnisse zeigen, daß durch Optimierung der Dampfmenge und des Rücklaufverhältnisses praktisch gerbstoff- und alkoholfreie Bitterstoffextrakte erhalten werden. Die im Extrakt verbleibenden Wasser- und Alkoholreste werden beim Durchgang durch einen Dünnschichtverdampfer beseitigt.

Das Beispiel wurde mit einem Rohextrakt mit 75 Gew.-% Feststoffgehalt (also 25% Restlösungsmittelgehalt) wiederholt, wobei der Restalkoholgehalt unter 0,5% (nämlich bei 0,2%) lag und die Trennung von Gerbstoff und Bitterstoff noch verbessert war. In einer großtechnischen Anlage werden Bitterstoffe mit einem Restalkoholgehalt unter 0,1%, teilweise unter 0,01%, erhalten.

## Beispiel 6

### (Verfahrensdurchführung im halbtechnischen Maßstab)

457 kg Hopfen HNB mit 7,3% Alphasäuren wurden in einem Extraktionsapparat im Gegenstrom mit Äthanol/Wasser = 90/10 Gew.-% extrahiert. Es wurden etwa 2200 l Miscella erhalten, die in einem dreistufigen Fallfilmverdampfer mit nachgeschaltetem zweistufigen Hochkonzentrator kontinuierlich eingedampft wurden. Das gewonnene Konzentrat hatte einen Feststoffgehalt von 82,8% und einen Restalkoholgehalt von 9%.

Der Extrakt wurde mit einer Temperatur von ca. 60° C kontinuierlich mit einer Leistung von 40 kg/h auf eine Siebbodenkolonne gepumpt, in die am unteren Ende Wasserdampf eingeblasen wurde. Das unten ablaufende Extrakt/Wasser-Gemisch wurde in einem nachgeschalteten Trennseparator in zwei Phasen zerlegt.

In einer Abänderung der Verfahrensweise wurde das Extrakt/Wasser-Gemisch in der Mitte einer hohen Säule eingepumpt, wobei sich durch eigene Schwerkraft die beiden Phasen trennten und oben bzw. unten abgezogen werden konnten. Hierbei ist ein spezifisches Gewicht der wäßrigen Phase von etwa 1,2 erforderlich. Der gewonnene Extrakt und die erhaltenen beiden Phasen hatten die in Tabelle III aufgeführte Zusammensetzung.

Tabelle III

| Probe bzw. Phase | Feststoff % | Gerbstoff %Trs | Ges. Harz % | % Trs | Alpha-Säuren (KW) % | % Trs | Äthanol Gew.-% |
|------------------|-------------|----------------|-------------|-------|---------------------|-------|----------------|
| Rohextrakt | 82,8 | 30,9 | 57,2 | 69,1 | 24,1 | 29,1 | 9,0 |
| Bitterstoffphase | 95,3 | 3,7 | 91,1 | 95,6 | 37,7 | 39,6 | 0,7 |
| Gerbstoffphase | 37,3 | 42 | 1,0 | — | 0,2 |  | 0,5 |

## 0 057 435

Die Ergebnisse dieses im halbtechnischen Maßstab durchgeführten Versuchs bestätigten die sich aus den Technikumversuchen ergebenden Erwartungen.

Beispiel 7

(Brauversuche)

Mit Hopfen der Sorte Hallertauer Nordbrauer (HNB) und Hallertauer Mittelfrüh (HMF) sowie mit den aus diesen Hopfen hergestellten Äthanolextrakten wurden Versuchssude angestellt. Aus dem HNB-Extrakt für Sud A wurde der Gerbstoff abgetrennt, während bei den Suden B und C Äthanol-Gesamtextrakte verwendet wurden. Die Hopfen und deren Extrakte hatten folgende Zusammensetzung:

Tabelle IV

| Hopfen bzw. Extrakt | $H_2O$ % | Ges. Harz | Alphasäuren % | Polyphenole + Anthocyanogene % |
|---|---|---|---|---|
| HNB A | 11,8 | 17,7 | 7,1 | 7,09 |
| Extrakt A | | 55,0 | 21,6 | 0,78 |
| HNB B | 9,7 | 18,1 | 8,9 | 4,62 |
| Extrakt B | 1,0 | 62,8 | 27,5 | 2,68 |
| HMF C | 12,9 | 12,2 | 4,7 | 5,87 |
| Extrakt C | 2,9 | 42,5 | 15,6 | 7,88 |

Beim Versuchssud A wurde bei Naturhopfen und bei Extrakt die gleiche Bitterstoffmenge (65 mg $\alpha$-Säuren/l Würze) eingesetzt. Bei den Suden B und C wurde mit dem Naturhopfen die 1,4fache Menge an $\alpha$-Säuren im Vergleich zu den Extrakten eingebracht. Der Bitterstoff wurde in einer Gabe zur kochenden Würze gegeben. Die Biere wurden normal gebraut und gelagert. Sie erbrachten die in Tabelle V aufgeführten Analysenwerte.

Tabelle V

| | Sud A HNB A | Extrakt A | Sud B HNB B | Extrakt B | Sud C HMF C | Extrakt C |
|---|---|---|---|---|---|---|
| EBC-Bittereinheit (BE) | 21,6 | 28,1 | 29,8 | 27,7 | 24,2 | 27,8 |
| $\alpha$-Säuren, mg/l | 2,1 | 0,8 | 2,5 | 1,7 | 2,8 | 2,0 |
| Iso-$\alpha$-Säuren, mg/l | 21,3 | 29,9 | 30,5 | 27,4 | 23,7 | 27,4 |
| Polyphenole + Anthocyanogene, mg/l | 221 | 214 | 238 | 199 | 274 | 216 |

Bei Sud A mit gleicher Bitterstoffgabe hatte das Extraktbier Bitterwerte, die ca. 40% über denen des Naturhopfenbieres lagen. Deshalb wurde bei den Suden B und C die 1,4fache Naturhopfenmenge eingesetzt. Trotzdem lagen die Bitterwerte im Extraktbier B nur ca. 10% unter denen des Vergleichsbieres, im Extraktbier C lagen sie deutlich darüber.

Die Beurteilung war wie folgt: In Aussehen, Geruch und Konsistenz unterscheiden sich die Äthanolextrakte nicht von handelsüblichen Methylenchloridextrakten. Die sortentypische Harzzusammensetzung von Bitter- und Aromahopfen bleibt erhalten.

Die Ausbeute an Iso-$\alpha$-Säuren beim Würzekochen war höher als aufgrund der Erfahrungen mit Methylenchloridextrakt erwartet.

Eine negative Beeinflussung des Vergärungsgrades, der Farbe, des Schaums, der Stickstoffverhältnisse sowie des Geschmacks und der Bittere ist nicht gegeben.

Der erhaltene Hopfenextrakt kann in an sich bekannter Weise zu Hopfenextraktpellets oder Hopfenextraktpulver weiterverarbeitet werden, beispielsweise durch inniges Vermischen mit gemahlenem Hopfen, gemahlenem Hopfentreber und/oder mineralischen Substanzen mit großer Oberfläche, insbesondere solchen auf Siliziumdioxidbasis oder Silikatbasis, wobei insbesondere die Kieselsäuren vom Typ Aerosil oder die Fällungskieselsäuren verwendet werden, wie dies beispielsweise aus der DE-A-1 927 996 bekannt ist. Auf diese Weise kann der Extrakt in ein frei fließendes Pulver oder in frei fließende und gut dosierbare Pellets überführt werden, wobei bei Pellets vor allem das Verkrusten des Extrakts mit gemahlenem Hopfentreber oder gemahlenem Hopfen oder das innige Vermischen und anschließendes Pelletisieren in Betracht kommt. Diese Arbeitsweisen sind auf diesem Gebiet bekannt, und es sei lediglich darauf hingewiesen, daß auch der gemäß vorliegender Erfindung hergestellte Extrakt wie die bekannten Extrakte weiter verarbeitet werden kann.

**Patentansprüche**

1. Verfahren zur Gewinnung von Bitterstoffen und Gerbstoffen aus Hopfen durch Extraktion des Hopfens mit wasserhaltigem Äthanol und nachfolgende Abtrennung des Gerbstoffs und Rückgewinnung des Äthanols aus dem Extrakt, dadurch gekennzeichnet, daß der Gerbstoffanteil und das Äthanol aus dem erhaltenen Äthanolextrakt gleichzeitig abgetrennt werden, indem man den heißen Äthanolextrakt mit einem Feststoffgehalt von etwa 75—80% kontinuierlich auf eine Füllkörper- oder Glockenbodenkolonne pumpt und im Gegenstrom von unten nach oben Wasserdampf durchbläst oder den Extrakt in ein unter Vakuum stehendes Gefäß zusammen mit Heißwasser einsaugt und somit durch Steuerung der zugeführten Wasser- bzw. Dampfmenge die Bildung eines Zweiphasenproduktes mit einer oberen Bitterstoffphase und einer unteren Gerbstoffphase herbeiführt.

2. Verfahren nach Anspruch 1, dadurch gekennzeichnet, daß man die untere wäßrige Phase durch Steuerung der zugeführten Wassermenge auf ein spezifisches Gewicht von etwa 1,2 einstellt.

3. Verfahren nach Anspruch 1, dadurch gekennzeichnet, daß man den extrahierten Gerbstoffanteil durch den Wassergehalt des als Extraktionsmittel eingesetzten Äthanols steuert.

4. Verfahren nach Anspruch 3, dadurch gekennzeichnet, daß man mit Äthanol mit einem Wassergehalt von etwa 4 bis 20 Gew.-% extrahiert.

5. Verfahren nach Anspruch 4, dadurch gekennzeichnet, daß man mit Äthanol mit einem Wassergehalt von 7 bis 15 Gew.-% extrahiert.

6. Verfahren nach Anspruch 1, dadurch gekennzeichnet, daß man die beiden Phasen getrennt aufarbeitet.

7. Verwendung der nach Ansprüchen 1 bis 6 gewonnenen Bitterstoffe und Gerbstoffe zur Herstellung von standardisierten Hopfenextrakten und Hopfenextraktpellets oder -pulver mit einem Gehalt an üblichen bekannten Trägermitteln vom Typ gemahlener Hopfen, Hopfentreber und/oder mineralische Substanzen mit großer Oberfläche, insbesondere auf Silikat- oder $SiO_2$-Basis.

**Claims**

1. A process for obtaining bitter principles and tanning principles from hops by extraction of the hop with aqueous ethanol and subsequent removal of the tanning principle and recovery of the ethanol from the extract, characterised in that the tanning principle content and the ethanol are removed simultaneously from the resulting ethanol extract by continuously pumping the hot ethanol extract, which has a solids content of about 75—80%, onto a packed column or bubble tray column and bubbling through steam in counter current from the bottom upwards, or sucking the extract, together with hot water, into a vessel which is under a vacuum, and thus causing, by controlling the amount of water or steam fed in, the formation of a two-phase product with an upper bitter principle phase and a lower tanning principle phase.

2. Process according to Claim 1, characterised in that the lower aqueous phase is brought to a specific gravity of about 1.2 by controlling the amount of water fed in.

3. Process according to Claim 1, characterised in that the extracted tanning principle content is controlled by means of the water content of the ethanol employed as the extraction agent.

4. Process according to Claim 3, characterised in that the extraction is carried out with ethanol with a water content of about 4 to 20% by weight.

5. Process according to Claim 4, characterised in that the extraction is carried out with ethanol with a water content of 7 to 15% by weight.

6. Process according to Claim 1, characterised in that the two phases are worked up separately.

7. Use of the bitter principles and tanning principles obtained according to Claims 1 to 6 in the preparation of standardised hop extracts and hop extract pellets or powders containing the customary known carriers of the type of ground hops, spent hops and/or mineral substances of large surface area, in particular based on silicate or $SiO_2$.

**Revendications**

1. Procédé d'obtention de substances amères et de tannins en partant du houblon, par extraction du houblon au moyen d'éthanol aqueux et ensuite séparation du tannin et récupération de l'éthanol de l'extrait, caractérisé par le fait que l'on sépare simultanément, de l'éxtrait à l'éthanol obtenu, la fraction de dannin et l'éthanol, en pompant de façon continue l'extrait à l'éthanol chaud, ayant une teneur en solides d'environ 75 à 80%, sur une colonne à garnissage ou à plateaux à cloche et en injectant de la vapeur d'eau à contre-courant de bas en haut, ou en aspirant l'extrait dans un récipient placé sous vide, en même temps que de l'eau chaude et en provoquant ainsi, par commande de la quantité d'eau ou de vapeur amenée, la formation d'un produit à deux phases comportant une phase supérieure de substances amères et une phase inférieure de tannins.

2. Procédé selon la revendication 1, caractérisé par le fait que l'on règle la phase aqueuse inférieure à une densité d'environ 1,2 en commandant la quantité d'eau amenée.

3. Procédé selon la revendication 1, caractérisé par le fait que l'on commande la proportion de tannins extraite par la teneur en eau de l'éthanol utilisé comme agent d'extraction.

4. Procédé selon la revendication 1, caractérisé par le fait que l'on extrait par un éthanol ayant une teneur en eau d'environ 4 à 20% en poids.

5. Procédé selon la revendication 1, caractérisé par le fait que l'on extrait par un éthanol ayant une teneur en eau de 7 à 15% en poids.

6. Procédé selon la revendication 1, caractérisé par le fait que l'on traite séparément les deux phases.

7. Utilisation des substances amères et tannins obtenus selon les revendications 1 à 6 pour la fabrication d'extraits de houblon normalisés et de macrogranulés ou poudre d'extrait de houblon ayant une teneur en véhicules connus usuels du type des houblons broyés, des drêches de houblon et/ou des substances minérales à grande surface, en particulier à base de silicate ou de $SiO_2$.